(19) Europäisches Patentamt

European Patent Office

Office européen des brevets

(11) Veröffentlichungsnummer: **0 191 950 B1**

# (12) EUROPÄISCHE PATENTSCHRIFT

(45) Veröffentlichungstag der Patentschrift: **22.04.92**

(21) Anmeldenummer: **85116635.5**

(22) Anmeldetag: **28.12.85**

(51) Int. Cl.⁵: **B23Q 35/128**, G05B 19/42

(54) **Fotoelektrische Einrichtung zum Nachführen eines Abtastkopfes entlang einer Vorlagenbahn.**

(30) Priorität: **18.02.85 DE 3505525**

(43) Veröffentlichungstag der Anmeldung:
**27.08.86 Patentblatt 86/35**

(45) Bekanntmachung des Hinweises auf die
Patenterteilung:
**22.04.92 Patentblatt 92/17**

(84) Benannte Vertragsstaaten:
**AT BE CH FR GB IT LI LU NL SE**

(56) Entgegenhaltungen:
US-A- 3 852 590        US-A- 4 160 199
US-A- 4 321 682        US-A- 4 344 091
US-A- 4 380 700        US-A- 4 493 968

ELECTRONIQUE INDUSTRIELLE, Nr. 28, 15.
Februar 1982, Seiten 63-67, Paris, FR; F. BER-
NIER et al.: "Capteurs optiques: les dispositifs photosensibles à transfert de charge
(DTC)"

ELEKTRONIK, Band 33, Nr. 16, 10. August
1984, Seiten 55-60, München, DE; B. KLEINE-
MEIER: "Eindimensionale Wandler liefern
zweidimensionale Bilder"

(73) Patentinhaber: **ESAB-HANCOCK GmbH**
**Robert-Bosch-Strasse**
**W-6367 Karben 1(DE)**

(72) Erfinder: **Decker, Klaus**
**Kurt Schumacher-Strasse 37**
**W-6365 Rosbach v.d.H. 1(DE)**
Erfinder: **Polacek, Ivan**
**Landgrafenstrasse 7**
**W-6450 Hanau 1(DE)**

(74) Vertreter: **Schubert, Siegmar, Dipl.-Ing. et al**
**Patentanwälte Dr. V. Schmied-Kowarzik Dr.**
**P. Weinhold Dr.-Ing. G. Dannenberg Dr. D.**
**Gudel Dipl.-Ing. S. Schubert Dr. P. Barz Gros-**
**se Eschenheimer Strasse 39**
**W-6000 Frankturt am Main 1(DE)**

## Beschreibung

Die Erfindung betrifft eine fotoelektrische Einrichtung zum Nachführen eines Abtastkopfes entlang einer Vorlagenbahn nach dem Oberbegriff des Anspruchs 1.

Derartige fotoelektrische Einrichtungen können beispielsweise dazu vorgesehen sein, eine Bearbeitungsmaschine zu steuern, die ein Werkstück nach Maßgabe einer fotoelektrisch abgetasteten Zeichnungsvorlage bearbeitet. Insbesondere kann so ein Brennerwagen einer Brennschneidmaschine in zueinander rechtwinklig orientierten Koordinatenrichtungen bewegt werden. - Im Rahmen einer Vielzahl anderer Anwendungsmöglichkeiten ist es aber auch unter anderem denkbar, einen Abtastkopf, der eine Zeichnungsvorlage mit Linien oder Silhouetten abtastend nachfährt, zur Ausmessung der Linien oder Flächen zu verwenden.

Um die Nachteile einer komplizierten aufwendigen Bauweise einer fotoelektrischen Einrichtung mit einem in einer Kreisbahn rotierenden optischen Element, einer Linse oder eines Hohlspiegels, zu vermeiden, welches elektromagnetisch durch eine sogenannte Sinus/Kosinusspule angetrieben wird, sind bereits fotoelektrische Einrichtungen zum Nachführen eines Abtastkopfes entlang einer Vorlagenbahn bekannt, die ohne in einer Kreisbahn kontinuierlich bewegte optische Elemente in dem Abtastkopf auskommen. Im einzelnen weist eine derartige bekannte fotoelektrische Einrichtung eine kreisförmgie Anordnung lichtempfindlicher Elemente, insbesondere Fotozellen, auf, auf welche ein Ausschnitt einer Vorlagenebene mit einer gegenüber den lichtempfindlichen Elementen ortsfesten Optik projiziert wird (US-PS 4 160 199). Mit der an die kreisförmig dicht nebeneinander angeordneten lichtempfindlichen Elemente angeschlossenen Auswertungsschaltung wird ermittelt, unter welchem Winkel das Abtastmuster von der abgetasteten Linie bzw. Kontur geschnitten wird. Aus einer Sinusfunktion und einer Kosinusfunktion dieses Winkels werden Signale zur Steuerung von Motoren gebildet, welche den Abtastkopf in zwei zueinander rechtwinkligen Richtungen entlang der abgetasteten Vorlagenbahn nachführen. Hierzu werden sämtliche lichtempfindlichen Elemente der kreisförmigen bzw. ringformigen Anordnung nacheinander abgefragt. Die Zeitdifferenz zwischen der Abfrage eines festen Bezugspunktes der kreisförmigen Anordnung der lichtempfindlichen Elemente und dem jeweils durch die Vorlagebahn abgedunkelten lichtempfindlichen Element wird in einem Abtastwinkelregister als Maß des Winkels gespeichert, unter dem die kreisförmige Anordnung der Elemente von der Vorlagebahn geschnitten wird. Die Ausgangsspannungen eines Sinuswellengenerators und des Abtastwinkelregisters werden zur Erzeugung zweier Spannungen verarbeitet, von denen die eine Spannung dem Sinus des Abtastwinkels proportional ist und einen Antriebsmotor für die X-Achse antreibt und die andere Spannung dem Kosinus des Abtastwinkels proportional ist und den Antriebsmotor für die Y-Achse speist. Zu einem anfänglichen Einstellen des Abtastkopfes auf die Vorlagebahn, der automatisch gefolgt werden soll, ist in diesem Zusammenhang eine Fangschaltung bekannt, die im wesentlichen darin besteht, daß durch einen einer Vielzahl manuell zu betätigender Schalter das Abtastwinkelregister so zurückgestellt wird, daß sein Inhalt einer gewünschten Bewegungsrichtung, beispielsweise in X-Achsenrichtung nach rechts entspricht. Die Schalter werden wirkungslos geschaltet, sobald die Anordnung der lichtempfindlichen Elemente die vorlagebahn erfaßt, der dann gefolgt wird. Eine Umschaltung der Konfiguration der lichtempfindlichen Elemente in der Anordnung ist dabei nicht vorgesehen. Die bekannte Einrichtung kann weiter mit Kompensations-oder Abgleichschaltkreisen zur Berücksichtigung der Breite der Vorlagebahn und/oder der Breite eines Werkzeugs, welches mit der Einrichtung gesteuert wird, ausgerüstet sein. Hierzu wird ein Abtastregister, welches die kreisförmig angeordneten lichtempfindlichen Elemente eines nach dem anderen abfragt, um das Abfrageergebnis in das Abtastwinkelregister einzuspeisen, voreingestellt. Die Voreinstellung erfolgt aufgrund einer Abschätzung der Vorlagebahnbreite, die beispielsweise zwei lichtempfindliche Elemente überdecken kann. Die serielle Abfrage sämtlicher lichtempfindlicher Elemente der feststehenden flächigen Anordnung in dem Kreisring bleibt aber dadurch unverändert. Dies gilt auch für eine selbsttätige Kompensation der Vorlagebahnbreite mit einer Schaltungsanordnung, welche die Ausgangssignale der ringförmigen Anordnung der lichtempfindlichen Elemente auswertet. Damit ist aber nur eine eingeschränkte Verbesserung der Abtastung,bzw. der in Abhängigkeit von der Abtastung gesteuerten Bearbeitung eines Werkstückes, in eine Richtung quer zur Vorlagebahn möglich.

Zum Stand der Technik gehört auch eine fotoelektrische Abtasteinrichtung zum Nachführen eines Abtastkopfes entlang einer Vorlagenbahn,jedoch ohne Adressiereinrichtung, bei der die lichtempfindlichen Elemente in verschiedenen Ausführungsformen der Einrichtung in unterschiedlicher Weise nebeneinander fest angeordnet sein können. Insbesondere werden mehrere Fotozellen gleicher wirksamer Oberfläche geradlinig nebeneinander in der Weise angeordnet, daß die Vorlagebahn mit einer wesentlichen Querkomponente abgetastet wird. Statt der geradlinig-reihenförmigen Anordnung können die lichtempfindlichen Elemente in Annäherung eines Kreisbogenabschnittes gegeneinander versetzt sein (US-PS 3 852 590). In jedem Fall werden die Signale von jeder Fotozelle einer Anordnung in einer festgelegten Weise Differenzverstärkern zugeführt, deren Ausgänge wiederum in einem Addierschaltkreis zusammengefaßt sind. Damit werden die von den Fotozellen abgegebenen Signale letztlich so ausgewertet, daß abgeleitete Signale erzeugt werden, welche die Richtung und das Maß der Abweichung der Vorlagebahn von dem durch die Fotozellen gebildeten Abtastmuster angeben, um daraus Steuersignale zum Antrieb des Abtastkopfes in zwei Koordinatenrichtungen zu bilden. Die zueinander festgelegte Anordnung der lichtempfindlichen Elemente kann zusammen mit der zugehörigen Beleuchtungseinrichtung für den Ausschnitt der Vorlagenebene um eine Achse mittels eines Abtastkopf-Motors gedreht werden. Damit kann der Anordnung der Fotozellen eine Verschiebung in Vorwärtsrichtung der Nachführbewegung das Abtastkopfes mitgeteilt werden, die als Vorwärts-Verschiebung oder Geschwindigkeitsvorverlagerung bezeichnet werden kann. Üblicherweise ist bei fotoelektrischen Einrichtungen zum Nachführen eines Abtastkopfes entlang einer Vorlagebahn die Geschwindigkeitsvorverlagerung dazu vorgesehen, aufgrund des mit dem Abtastkopf erfaßten Verlaufs der Vorlagebahn die Nachführbewegung rechtzeitig zu verzögern, wenn die Vorlagebahn aus einem wenig gekrümmten Abschnitt in einen Abschnitt besonders starker Krümmung oder in eine Ecke übergeht. Es soll damit vermieden werden, daß der Abtastkopf und gegebenenfalls das mit ihm gekoppelte Werkzeug über den Bereich besonders starker Krümmung oder die Ecke der Vorlagebahn infolge der begrenzten dynamischen Eigenschaften des Systems überschwingt also der Vorlagebahn in diesem Abschnitt nicht genau folgt. Bei rechtzeitigem Erkennen des Abschnittes stärkerer Krümmung oder der Ecke kann jedoch der Abtastkopf mit reduzierter Nachführgeschwindigkeit die Vorlagebahn ohne Überschwingen nachfahren. - Bei der zum Stand der Technik gehörenden fotoelektrischen Einrichtung wird also die Geschwindigkeitsvorverlagerung mechanisch durch Drehen des Abtastkopfes bei in dem Abtastkopf feststehender Konfiguration der Fotozellen erzeugt. Diese Drehung des Abtastkopfes ist im Hinblick auf den erforderlichen Abtastkopfsteuermotor und die Übertragung der Signale der Fotozellen über Schleifringe und ähnliche Zuführung des Stromes für die Beleuchtungseinrichtung indem Abtastkopf relativ aufwendig. Hinzu kommen die übrigen bekannten Nachteile von Schleifringen.

Zur Geschwindigkeitsvorverlagerung und Werkzeugquerverlagerung, d.h. zur Korrektur der Bearbeitungsbreite des Werkzeugs (Schnittspalt), ist es auch bekannt, einen Abtastkopf einer fotoelektrischen Einrichtung zum Nachführen entlang einer Vorlagenbahn mit einer unveränderbaren Anordnung lichtempfindlicher Elemente in dem Abtastkopf um eine exzentrische Achse drehbar auszubilden (US-PS 4 072 301). Die feinmechanischen Mittel zu dieser besonderen Drehbarkeit des Abtastkopfes entsprechend zwei Parametern, wozu ein Abtastkopf-Steuermotor gehört, ist relativ aufwendig. Trotz des Aufwands kann nur die Lage des durch die Fotozellenanordnung gebildeten Abtastmusters verschoben werden, während die Form des Abtastmusters festliegt.

Bekannt ist auch eine elektrische Kopier-Steuerungsvorrichtung für Bearbeitungsmaschinen mit einem fotoelektrisch einen eine Vorlagebahn enthaltenden Führungsbereich mit einer wesentlichen Querkomponente abtastenden Abtastkopf, an den eine Steuereinrichtung angeschlossen ist, die aus den Ausgangssignalen des Abtastkopfes Steuersignale zur Bewegung des Abtastkopfes und eines mit ihm verbundenen Werkzeugs in Richtung der Tangente an die Vorlagebahn bildet (DE-PS 25 05 296). Seitlich des Führungsbereiches ist auf der Vorlage ein gesonderter Codebereich mit Markierungen vorgesehen, der durch den Abtastkopf getrennt von dem Führungsbereich abgetastet werden kann. Durch die Abtastung des Codebereichs werden zusätzliche Steuerbefehle zur Beeinflussung des Abtastkopfes und/oder des Werkzeugs ausgelöst. Zusätzlich gesteuert werden können dadurch die Laser- oder Brennersteuerung, linksrechts Informationen bei Gabelungen oder Kreuzungen der Vorlagebahn, Werkzeugwechsel oder Geschwindigkeitsumschaltungen. Die Abtastung des Ausschnittes der Vorlagenebene erfolgt dabei so, daß abwechselnd nacheinander der Führungsbereich und Codebereiche überstrichen werden und die dabei gewonnenen Ausgangssignale des Abtastkopfes in verschiedenen Schaltstufen des Steuergeräts ausgewertet werden. Für die getrennte Abtastung des Führungsbereichs und des Codebereichs oder der Codebereiche können Blenden vorgesehen sein, die lichtempfindliche Bereiche des Abtastkopfes entsprechend den abzutastenden Führungs- und Codebereichen abdecken. Statt der mechanischen im Abtastbereich angeordneten Blenden kann aber die Ausblendung der jeweils inaktiven lichtempfindlichen Bereiche bevorzugt im Steuergerät elektronisch erfolgen. - Die Lage und die Form des die Vorlagebahn abtastenden Abtastmusters bleiben jedoch in jedem Fall unverändert, und zur Berücksichtigung besonderer Betriebsparameter in der Kopier-Steuerungsvorrichtung müssen in aufwanderhöhender Weise zusätzliche Codebereiche mit Markierungen auf der Vorlage vorgesehen werden.

In einer fotoelektrischen Einrichtung der eingangs genannten Gattung ist eine kreisförmige Anordnung von z.B. 64 Fotodioden vorgesehen, die alle seriell mit Taktimpulsen abgefragt werden (US-A-4 380 700). Die abgefragten Belichtungsdaten sämtlicher Fotodioden werden jedoch nicht alle zu dem nachfolgenden Abtastsystem übertragen, sondern nur diejenigen, die während eines bestimmten, vorgegebenen Zeitintervalls auftreten, das auch als Fenster bezeichnet wird. Entsprechend der Vorgabe des Fensters in Bezug auf einen Abfragezyklus der Fotodioden kann das für die weitere Auswertung der Belichtungsdaten gewünschte Segment der kreisförmigen Fotodiodenanordnung bestimmt werden. - Nach dieser Vorgehensweise kann die Form und/oder die Lage des Abtastmusters nur in sehr beschränktem Umfang geändert werden, da es sich stets nur um kreissegmentförmige Ausschnitte der kreisförmigen Fotodiodenanordnung handeln kann. Die Abfrage der gesamten Fotodiodenanordnung und die Auswertung aller abgefragten Belichtungsdaten dauert entsprechend der vollständigen Zykluszeit lang. Ein Ersatz der aufwendigen Anordnung individueller Fotodioden durch einen CCD Chip ist nicht vorgesehen.

Weiterhin ist eine fotoelektrische Einrichtung der eingangs genannten Gattung bekannt, in die lichtempfindliche Elemente in einer ein Vorlagenbild abtastenden matrixförmigen Anordnung gruppiert sind (US-A-4 321 682). Alle fotoelektrischen Elemente werden unabhängig von einem gewünschten Abtastmuster seriell in Zeilenrichtung und von Zeile zu Zeile abgefragt. Es muß daher zur Auswertung der Belichtungsdaten eine große Datenmenge verarbeitet werden. Dies gilt auch bei einer Modifikation des Abtastmusters, welche nur durch Verschieben eines Abtastgrundmusters in verschiedenen Koordinatenrichtungen erfolgen kann. Dazu werden modifizierte Vergleichsflächen aus einem Speicher synchron ausgelesen, während die Elemente der Matrixanordnung seriell abgefragt werden.

Zum Stand der Technik gehört ferner eine Koppeleinheit, mit der ein zweidimensionales Bild einer wählbaren Bildschirmnorm aus gleichbleibenden zeilenmäßigen Abtastmustern erzeugt wird, die von eindimensionalen Wandlern oder Zeilenwandlern erzeugt werden (ELEKTRONIK, Band 33, Nr. 16, 10. August 1984 Seiten 55 - 60, München, DE; B.Kleinemeier: "Eindimensionale Wandler liefern zweidimensionale Bilder"). Ein ringförmig angelegter Bildspeicher ist vorgesehen, um ein zweidimensionales Bild aus dem Datenstrom des eindimensionalen Wandlers aufzubauen. In den Bildspeicher werden die Bilddaten eingeschrieben, wozu ein Schreibadresszähler stetig über den ganzen Speicherbereich inkrementiert wird. Zur Bildung der Leseadressen ist ein Addierer vorgesehen, der die Schreibadresse bei Zeilenbeginn, die letztmalig vor Bildbeginn festgehalten wurde, eine konstante Versatzadresse sowie den Inhalt eines Inkrementierers addiert. Mit der Versatzadresse wird eine Bildschirmnorm eingestellt. - Diese Adressiereinrichtung ist jedoch nicht als Abtastmustererzeuger ausgebildet, der verschiedene gewünschte, insbesondere zweidimensionale Abtastmuster erzeugt. Vielmehr liegt das Abtastmuster hier durch die eindimensionalen Wandler fest. Das Abtastmuster ist nur eine gerade Abtastlinie.

Allgemein gehörte eine Matrix mit einer Vielzahl in Reihen punktförmig angeordneter Fotoelemente zum Stand der Technik, die einer Zone zur Umwandlung des Lichtstroms angeordnet sind, mit einer Speicherzone, in welche die detektierten Lichtsignale aus der ersten Zone übertragbar sind, sowie mit einem mit der Speicherzone in Verbindung stehenden Leseregister. Damit war aber nicht offenbart, durch gezielte Abfrage des Leseregisters bestimmte Abtastmuster einzustellen (ELECTRONIQUE INDUSTRIELLE, Nr. 28, 15. Februar 1982, Seiten 63 - 67, Paris, FR).

Der vorliegenden Erfindung liegt daher die Aufgabe zugrunde, eine fotoelektrische Einrichtung zum Nachführen eines Abtastkopfes entlang einer Vorlagenbahn der eingangs genannten Gattung so weiterzubilden, daß bei Verwendung lichtempfindlicher Chips nach dem CCD Prinzip eine rasche Abfrage des Belichtungszustands der lichtempfindlichen Elemente des Chips bei in großem Variationsbereich variierbarem Abtastmuser und eine rasche, wenig redundante Verarbeitung der Belichtungszustandsdaten erreicht werden.

Diese Aufgabe wird durch die Ausbildung der fotoelektrischen Einrichtung der eingangs genannten Gattung mit dem in den kennzeichnenden Teil des Anspruchs 1 genannten Merkmalen gelöst.

Damit kann die Form des gewünschten Abtastmusters wie geschlossene oder offene Kreisringe bei vergleichsweise geringem Aufwand genau angenähert werden. Auf die Herstellung spezieller lichtempfindlicher Elemente kann dabei verzichtet werden, vielmehr werden besonders vorteilhaft lichtempfindliche Chips nach dem CCD (Charge Coupled Device)-Prinzip, wie sie in elektronischen Bildaufnahmegeräten verwendet werden, benutzt. Vorzugsweise sind die erfindungsgemäß verwendeten lichtempfindlichen Elemente in einer Ebene rasterförmig in Spalten und Kolonnen angeordnet. Die lichtempfindliche Gesamtfläche ist dabei insbesondere rechteckig.

Bei der Verwendung von Chips mit CCD-Elementen muß die Abfrage durch eine bestimmte Auswahl der Spalten (z.B. alle oder je drei Spalten) der lichtempfindlichen Elemente in fester Reihenfolge durchgeführt werden. Um die individuellen genauen Abtastmuster mit solchen Chips zu verwirklichen, ist ein zusätzlicher Speicher vorgesehen, der konform der geometrischen Anordnung der lichtempfindlichen Elemente in einer Ebene organisiert ist, und aus dessen Speicherzellen wiederum die Information in direktem Zugriff ausgelesen werden kann, ob das zugeordnete lichtempfindliche Element belichtet oder durch die Vorlagenbahn abgedunkelt wurde.

Der zusätzliche Speicher bildet zusammen mit einer Leselogik, über die das konforme Abbild der geometrischen Anordnung der lichtempfindlichen Elemente in dem zusätzlichen Speicher erzeugt wird, eine Zwischenlogik, welche die Ausgangssignale zur weiteren Auswertung abgibt.

Die als Abtastmustererzeuger vorgesehene Adressiereinrichtung generiert eine dem Abtastmuster entsprechende Folge von Adressen der lichtempfindlichen Elemente in der flächigen Anordnung, mit denen die Speicherzellen des konformen Speichers direkt, d.h. im willkürlichen Zugriff abgefragt werden.

Zur Auswertung der durch die Abfrage der lichtempfindlichen Elemente oder des konformen Speichers erzeugten seriellen Ausgangssignale können diese einer Mittelwertsbildung unterworfen werden, aus deren Ergebnis in an sich bekannter Weise die Lage der Vorlagebahn (Linienschwerpunkt) bzw. der Kante einer abgetasteten Fläche abgeleitet werden kann. Der Mittelwertbilder gehört also zu einer Auswertungseinrichtung, die weiter Schaltungsanordnungen zur Richtungserkennung und zur Bildung eines Bahnvektors umfaßt, auf dem der Abtastkopf nachzuführen ist. Dazu werden aus den Komponenten des Bahnvektors weiter Sollwertsignale für die Geschwindigkeit zweier Antriebssysteme gebildet, welche in zwei rechtwinklig zueinander orientierten Bewegungsrichtungen die Nachführbewegung des Abtastkopfes und eines gegebenenfalls mit diesem gekoppelten Werkzeugs durchführen. Die Nachführgeschwindigkeit hängt dabei von der Größe des Bahnvektors ab.

Bei der erfindungsgemäßen Einrichtung kann die Verschiebung des Abtastmusters in Richtung der Nachführbewegung für die Geschwindigkeitsvorverlagerung und/oder quer zur Nachführbewegung für die Werkzeugquerverlagerung bei Verwendung der Einrichtung zur Steuerung einer Bearbeitungsmaschine durch Auswahl der Abfrage der lichtempfindlichen Elemente aus der größeren Anzahl in der gleichbleibenden flächigen Anordnung erfolgen, die in einem der Verschiebung entsprechenden Abstand zu den lichtempfindlichen Elementen liegen, die ein Abtastnormalmuster bilden. Unter Abtastnormalmuster wird hier dasjenige durch die lichtempfindlichen Elemente gebildete Abtastmuster verstanden, welches weder eine Geschwindigkeitsvorverlagerung noch eine Werkzeugquerverlagerung ergibt. Bei dem Abtastnormalmuster fällt also ein definierter Punkt des Abtastmusters bzw. der das Abtastmuster bildenden generierten Kurve mit dem Arbeitspunkt zusammen. Der Arbeitspunkt stellt dabei denjenigen Punkt dar, in dem der Mittelpunkt eines Bearbeitungswerkzeugs liegt, welches mit dem Abtastkopf gekoppelt sein kann. - Der besondere Vorteil dieser Einrichtung besteht darin, daß nicht nur die Geschwindigkeitsvorverlagerung oder die Werkzeugquerverlagerung, sondern beide Verlagerungen zugleich variabel eingestellt werden können, ohne einen hohen Aufwand, insbesondere für feinmechanische Einstellmittel des Abtastkopfes zu erfordern.

Durch die weitere Ausbildung der fotoelektrischen Einrichtung nach Anspruch 4 wird erreicht, daß die aktiven lichtempfindlichen Elemente des Abtastkopfes bei jeder der sich bei nicht geraden Vorlagebahnen ändernden Verfahrrichtungen stets um eine vorgegebene Geschwindigkeitsvorverlagerung die Vorlagebahn im voraus abtastet und immer um den gleichen vorgegebenen Abstand der Querverlagerung die Vorlagebahn von der Seite her abtastet. Somit entfällt ein Abtastkopfsteuermotor, der den Abtastkopf um eine Achse senkrecht zur Vorlagebahn dreht, so daß der Abtastkopf stets um den gleichen Winkel zu dem Bahnvektor verdreht ist, in dessen Richtung der Abtastkopf bewegt werden muß, damit er und das von ihm gesteuerte Werkzeug der Vorlagebahn folgt. Mit anderen Worten, erfindungsgemäß wird die Abtastmusterverschiebelogik nach Maßgabe des Bahnvektors parametriert. Dadurch, daß die Abtastmusterverschiebelogik so ausgebildet ist, daß das Abtastmuster die Vorlagebahn möglichst quer unabhängig von der Lage des Bahnvektors schneidet, genügen verhältnismäßig wenige aktive lichtempfindliche Elemente, die das Abtastmuster bilden, zur sicheren Nachführung. Dadurch kann die Abtastgeschwindigkeit erhöht werden.

Zur einstellbaren Werkzeugquerverlagerung einer mit der fotoelektrischen Einrichtung gesteuerten Bearbeitungsmaschine kann in die Abtastmusterverschiebelogik ein Werkzeugradius-Datum eingespeist werden.

Besonders vorteilhaft kann die fotoelektrische Einrichtung nach Anspruch 6 durch die als Abtastmuster ausgebildete Adressiereinrichtung, die durch einen Betriebsartenumschalter umschaltbar ist, je nach Betriebsart auf ein dieser angepaßtes Abtastmuster eingestellt werden. Dadurch läßt sich die Abtastung für alle Betriebsarten mit einfachen Mitteln optimieren.

Insbesondere kann nach Anspruch 7 die als Abtastmustererzeuger ausgebildete Adressiereinrichtung zur Generierung eines Vollkreises, dessen Mittelpunkt um mindestens den Werkzeugradius in Fahrtrichtung des Abtastkopfes vorverlegt ist, während der Betriebsart "Fangen" einstellen. Bei dieser Betriebsart fährt der Abtastkopf zunächst durch eine weitere Steuerung, die insbesondere manuell eingestellt werden kann, geradlinig auf die Vorlagebahn bzw. eine Kontur zu. Der Vollkreis als Abtastmuster egibt dabei die größte Gewähr, daß die Vorlagebahn sicher erfaßt wird. Sobald dies geschehen ist kann auf die Betriebsart "Folgen" umgeschaltet werden. Bei dieser Betriebsart wird zur Erhöhung der Abtastfrequenz bzw. Abtastgeschwindigkeit nur ein Teilkreis als Abtastmuster benutzt, der ausreicht, um den Bahnvektor zu erkennen. Dieser Teilkreis kann einen so kurzen Bogen haben, daß er nur auf beiden Seiten sicher über die Breite der Vorlagebahn auch dann hinausragt, wenn die Vorlagebahn gekrümmt verläuft.

In der Weiterbildung der fotoelektrischen Einrichtung nach Anspruch 8 ist die als Abtastmustererzeuger ausgebildete Adressiereinrichtung so dimensioniert, daß sie zwei Abtastmuster nacheinander zeitversetzt erzeugen kann. Das erste Abtastmuster dient zur Nachführung des Abtastkopfes in Richtung des Bahnvektors, während das zweite Abtastmuster durch eine Querregelung den aktuellen Arbeitspunkt genau auf der abgetasteten Vorlagebahn hält, obwohl das vorausschauende erste Abtastmuster infolge der Krümmung der Vorlagebahn einen variablen seitlichen Versatz des Arbeitspunktes hervorrufen würde.

Ein Ausführungsbeispiel der Erfindung wird im folgenden anhand einer Zeichnung mit drei Figuren erläutert. Es zeigen:

Figur 1 eine Draufsicht auf einen Teil einer Bearbeitungsmaschine, nämlich eine Brennschneidmaschine mit zwei Brennern als Werkzeuge, die durch einen Abtastkopf in zwei zueinander senkrechten Koordinatenrichtungen gesteuert werden,

Figur 2 einen Ausschnitt einer Vorlagenebene mit einer Vorlagebahn, die zur Steuerung der Werkzeuge nach Figur 1 abgetastet wird,und

Figur 3 eine schematische Darstellung der fotoelektrischen Einrichtung zum Nachführen eines Abtastkopfes nach der Vorlagebahn und der mit dem Abtastkopf gekoppelten Werkzeuge.

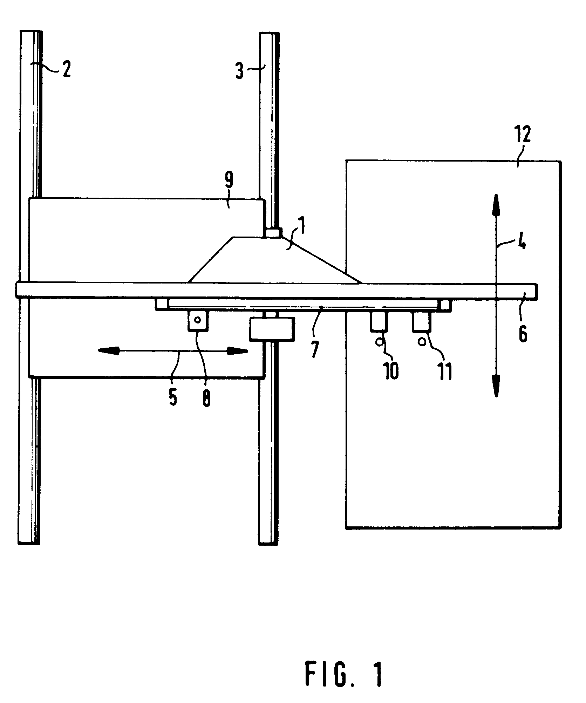

In Figur 1 ist als ein Anwendungsbeispiel der fotoelektrischen Einrichtung zum Nachführen in einer Draufsicht ein Teil einer Brennschneidmaschine schematisch dargestellt. Ein Maschinenwagen umfaßt einen Längswagen 1, der auf Laufund Führungsschienen 2, 3 in Längsrichtung - Doppelpfeil 4 - verfahrbar ist. In Querrichtung - Doppelpfeil 5 - kann auf einem Ausleger 6 des Längswagens ein Querwagen 7 verfahren werden. Zum Antrieb des Längswagens und des Querwagens dient je ein in der Zeichnung nicht dargestelltes Antriebssystem.

Der Querwagen trägt einen Abtastkopf 8 über einer Vorlagenebene bzw. Abtastfläche 9. Die mit dem Abtastkopf über den Querwagen starr gekuppelten Werkzeuge 10, 11, im vorliegender Fall Brenner, werden über einer Arbeitsfläche 12 geführt, um dort beispielsweise Bleche entsprechend einer Vorlagebahn der Abtastfläche 9 zu schneiden.

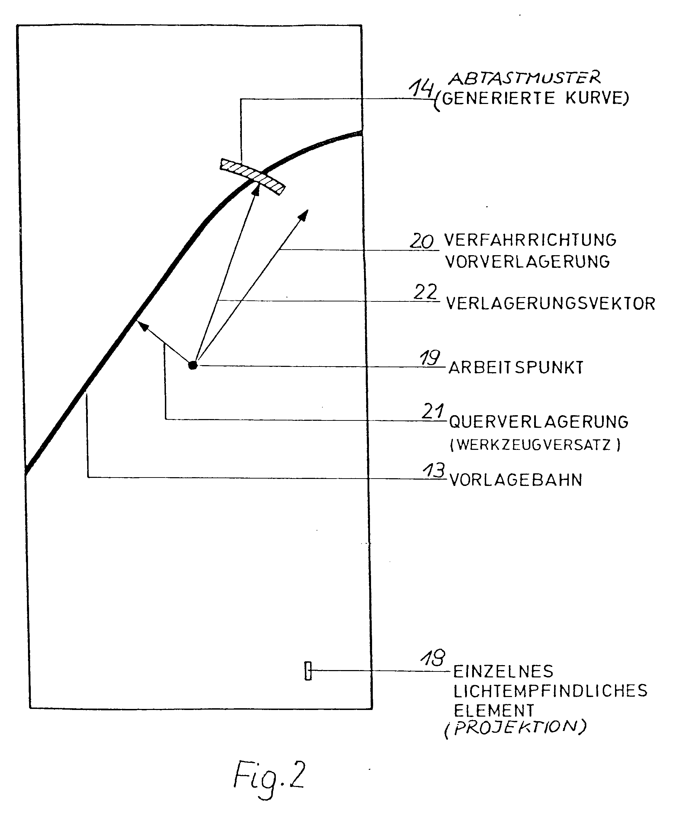

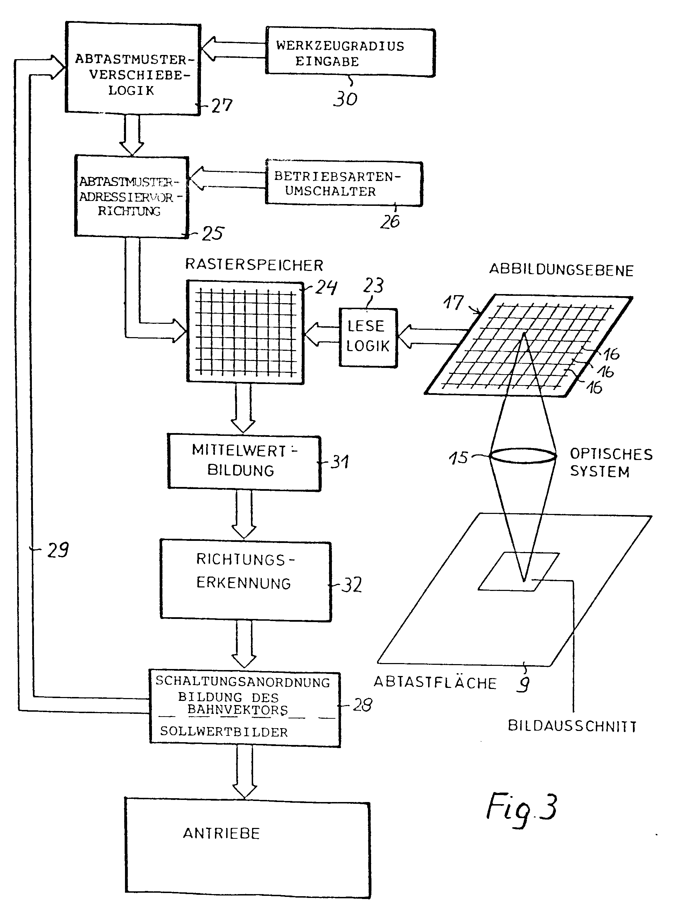

In Figur 2 ist ein Ausschnitt der Vorlagenebene mit einer Vorlagebahn 13 dargestellt. Die Vorlagebahn wird mit einem Abtastmuster bzw. einer in dem Abtastkopf generierten Kurve 14 fotoelektrisch abgetastet. Dazu wird der Ausschnitt der Vorlagenebene mit einer Beleuchtungseinrichtung in dem Abtastkopf beleuchtet und das Bild der Vorlagebahn des Ausschnittes wird über ein optisches System 15 - siehe Figur 3 - in eine Abbildungsebene mit einer Anzahl rasterförmig in Spalten und Reihen angeordneten lichtempfindlichen Elementen 16 abgebildet. Die rechteckige flächige Anordnung der lichtempfindlichen Elemente ist allgemein mit 17 bezeichnet.

Die in Bild 2 mit 14 bezeichnete generierte Kurve entspricht aktivierten lichtempfindlichen Elementen in der Anordnung 17. Dabei bedeutet "aktiviert", daß die mit den lichtempfindlichen Elementen gebildeten Daten des Belichtungszustands dieser Elemente abgefragt und weiter verarbeitet werden.

In Figur 2 ist weiterhin die Projektion eines einzelnen lichtempfindlichen Elements in die Vorlagenebene mit 18 dargestellt. Das Abtastmuster oder die generierte Kurve 14 wird also mit solchen nebeneinanderliegenden lichtempfindlichen Elementen, die aktiviert werden, angenähert.

Aus Figur 2 kann weiter entnommen werden, daß ein Arbeitspunkt 19, auf den der Abtastkopf 8 bzw. die Werkzeuge 10, 11 bei Abtastung der Vorlagebahn 13 mit dem Abtastmuster 14 eingestellt sind, um eine Vorverlagerung 20 des Abtastmusters in Verfahrrichtung bzw. Nachführrichtung versetzt ist, sowie um eine Querverlagerung 21, die dem Werkzeugradius bzw. Brennerradius entspricht. Die Vorverlagerung wird auch als Geschwindigkeitsvorverlagerung bezeichnet und die Querverlagerung wird Werkzeugquerverlagerung genannt. Aus der Vorverlagerung und der Querverlagerung resultiert ein Verlagerungsvektor 22, der von dem Arbeitspunkt 19 ausgeht und zu dem Schnittpunkt des Abtastmusters 14 mit der Vorlagebahn 13 führt. Ein Bahnvektor, auf dem der Abtastkopf bewegt werden muß, damit dieser sowie die gekuppelten Werkzeuge der Vorlagebahn folgen, hat die Richtung der Verfahrrichtung Vorverlagerung 20 und einen Betrag gleich der Nachführgeschwindigkeit.

Wie erwähnt, wird das Abtastmuster 14 mit der flächigen Anordnung 17 der in Spalten und Reihen angeordneten lichtempfindlichen Elemente 16 erzeugt. In Fig. 3 handelt es sich bei den lichtempflindlichen Elementen um sogenannte CCD-Elemente, wie sie in typischer Weise in für Bildaufnahmegeräte vorgesehenen Chips vorliegen und die elektronisch daraufhin ausgelesen werden können, ob über eine Zeitspanne Licht auf das jeweilige Element gefallen ist oder nicht. Da die CCD-Elemente nicht ohne weiteres einzeln direkt abgefragt werden können, werden die Daten sämtlicher lichtempfindlicher CCD-Elemente über eine Leselogik 23 in einen sogenannten Rasterspeicher 24 übertragen. Der Rasterspeicher ist konform der rasterförmigen flächigen Anordnung der lichtempfindlichen Elemente der flächigen Anordnung 17 organisiert, jedoch sind alle Speicherzellen des Rasterspeichers einzeln direkt zugreifbar.

Die Form des Abtastmusters 14 in Figur 2 sowie dessen Vorverlagerung in Verfahrrichtung 20 und Querverlagerung 21 werden dadurch erzeugt, daß nur eine entsprechende Auswahl bestimmter Speicherzellen des Rasterspeichers zur Verarbeitung der in ihnen gespeicherten Daten des Belichtungszustands der zugeordneten lichtempfindlichen Elemente zur weiteren Auswertung abgefragt werden. Hierzu werden die Speicherzellen durch eine Abtastmuster-Adressiereinrichtung 25 abgefragt. Die Abtastmuster-Adressiereinrichtung 25 bildet dazu die Adressenfolge für die Speicherzellen, deren lichtempfindlichen Elemente auf der gewünschten abtastenden Kurve liegen, die man sich als in die Vorlagenebene projiziert entsprechend der generierten Kurve 14 in Figur 2 vorstellen kann. Der Kurvenerzeuger kann eine Entzerrung der Optik einschließen und die rechteckige, nicht wie ideal gewünschte quadratische Form der nebeneinander angeordneten lichtempfindlichen Elemente berücksichtigen.

Die Form des Abtastmusters kann mit einem Betriebsartenumschalter 26, der auf die Abtastmuster-Adressiereinrichtung 25 einwirkt, vorgegeben werden. Damit läßt sich insbesondere ein Vollkreis als Abtastmuster in der Betriebsart "Fangen" einstellen, dessen Mittelpunkt um mindestens einen Werkzeugradius in Fahrtrichtung vorverlegt ist. In der Betriebsart "Fangen" fährt der Abtastkopf geradlinig auf die Vorlagebahn 13 zu, bis die Vorlagebahn erfaßt wird. Sodann kann über den Betriebsartenumschalter gegebenenfalls auch selbsttätig auf die Betriebsart "Folgen" umgeschaltet werden. In dieser Betriebsart wird mit der Abtastmuster-Adressiereinrichtung nur noch ein genügend weiter Teilkreis erzeugt, mit dem bei der Nachführbewegung des Abtastkopfes die Vorlagebahn noch mit Sicherheit erfaßt bleibt, um die Nachführbewegung weiter zu steuern. Infolge des verhältnismäßig kurzen Bogens des Teilkreises kann die Abtastfrequenz erhöht werden.

Die Verschiebung eines Abtastmusters in Verfahrrichtung als Vorverlagerung 20 und die Querverlagerung entsprechend dem Werkzeugradius wird durch eine Abtastmusterverschiebelogik 27 ausgelöst, welche die Abtastmuster-Adressiereinrichtung steuert. Damit die Verschiebung des Abtastmusters, welches die Vorlagebahn vorzugsweise quer schneiden soll, für alle Verläufe der Vorlagebahn erreicht wird, ist die Abtastmusterverschiebelogik durch den Bahnvektor steuerbar, der mit einer Auswertungseinrichtung aus den abgefragten Speicherzellen des Rasterspeichers 24 gebildet wird. Zu dieser Steuerung ist ein Ausgang einer Schaltungsanordnung 28 zur Bildung des Bahnvektors über eine Datenleitung 29 mit einem Eingang der Abtastmusterverschiebelogik 27 verbunden. In einen zweiten Eingang der Abtastmusterverschiebelogik kann ein Datum von der Werkzeugradiuseingabe 30 eingespeist werden.

Zur Auswertungseinrichtung gehören ein von Ausgängen des Rasterspeichers gespeister Mittelwertbilder 31, der eine Schaltungsanordnung 32 zur Richtungserkennung für die Nachführbewegung sowie die Schaltungsanordnung zur Bildung des Bahnvektors 28 steuert. Der Bahnvektor umfaßt außer der Richtung der Nachführbewegung auch den Betrag der Nachführgeschwindigkeit. Zu der Schaltungsanordnung 28 gehört weiter ein Sollwertbilder für die Geschwindigkeiten, mit denen die Antriebssysteme - Block 33 - den Abtastkopf und die Werkzeuge in Längsrichtung und Querrichtung verfahren, um Abtastkopf und Werkzeuge der Vorlagebahn nachzuführen.

## Patentansprüche

1. Fotoelektrische Einrichtung zum Nachführen eines Abtastkopfes (8) entlang einer Vorlagenbahn (13), der eine gleichbleibende Anordnung (17) dicht nebeneinanderliegender, abfragbarer, lichtempfindlicher Elemente (16) aufweist, die ein mit einer Adressiereinrichtung abfragbares Abtastmuster (14) bilden, dessen Form und/oder Lage durch wählbare Abfrage der Daten bestimmter lichtempfindlicher Elemente (16) aus einer größeren Anzahl in der gleichbleibenden flächigen Anordnung (17) vorgesehener lichtempfindlicher Elemente (16) variierbar ist, wobei auf die Anordnung ein Ausschnitt einer Vorlagenebene zur Abtastung mit einer wesentlichen Querkomponente des Abtastmusters abgebildet wird, sowie mit einer Auswertungseinrichtung, mit der aus Belichtungszustands-Signalen der abgefragten lichtempfindlichen Elemente Steuersignale erzeugt werden, welche die Nachführbewegung des Abtastkopfes in zwei zueinander rechtwinklig orientierten Bewegungsrichtungen (20, 21) steuern, **dadurch gekennzeichnet,** daß zwischen den lichtempfindlichen Elementen (16) der Anordnung (17) und einem Speicher (Rasterspeicher 24), eine derart ausgebildete Leselogik (23) eingeschaltet ist, daß das konforme Abbild der geometrischen Anordnung (17) der lichtempfindlichen Elemente (16) in dem Speicher (Rasterspeicher 24) erzeugt wird, und daß eine als Abtastmustererzeuger ausgebildete Adressiereinrichtung (25) vorgesehen ist, die eine dem Abtastmuster (14) entsprechende Folge von Adressen erzeugt, mit denen Belichtungszustands-Daten der nach Maßgabe des Abtastmusters bestimmten lichtempfindlichen Elemente aus Speicherzellen des Speichers (Rasterspeicher 24) in willkürlichem Zugriff (random access) abfragbar sind.

2. Fotoelektrische Einrichtung nach Anspruch 1,
   **dadurch gekennzeichnet,**
   daß die lichtempfindlichen Elemente (16) in einer Ebene rasterförmig in Spalten und Reihen (Anordnung 17) angeordnet sind.

3. Fotoelektrische Einrichtung mit Mitteln zur Verschiebung des Abtastmusters in Richtung der Nachführbewegung und/oder quer zur Nachführbewegung für eine Geschwindigkeitsvorverlagerung und/oder Werkzeugquerverlagerung zur Steuerung einer Bearbeitungsmaschine nach Anspruch 1 oder 2,
   **dadurch gekennzeichnet,**
   daß die Verschiebung durch Auswahl der Abfrage der Speicherzellen erfolgt, die den lichtempfindlichen Elementen (16) aus der größeren Anzahl in der gleichbleibenden flächigen Anordnung (17) zugeordnet sind, die in einem der Verschiebung entsprechenden Abstand zu den lichtempfindlichen Elementen liegen, die ein Abtastnormalmuster bilden.

4. Fotoelektrische Einrichtung mit einer Auswertungseinrichtung, nach den Ansprüchen 1 und 3,
   **dadurch gekennzeichnet,**
   daß ein Ausgang der Auswertungseinrichtung (28, 31, 32), welche aus den Belichtungszustands-Signalen der abgefragten Speicherzellen Signale eines Bahnvektors bildet, auf dem die Nachführbewegung des Abtastkopfes erfolgt, wobei der Betrag des Bahnvektors der Nachführgeschwindigkeit entspricht, über eine Abtastmusterverschiebe-Logik (27) mit der als Abtastmustererzeuger ausgebildeten Adressiereinrichtung (25) in Verbindung steht, und daß die Abtastmusterverschiebe-Logik so ausgebildet ist, daß das Abtastmuster die Vorlagenbahn (13) wenigstens annähernd quer schneidet.

5. Fotoelektrische Einrichtung nach Anspruch 4,
   **dadurch gekennzeichnet,**
   daß zur Werkzeugquerverlagerung einer mit der fotoelektrischen Einrichtung gesteuerten Bearbeitungsmaschine in die Abtastmusterverschiebe-Logik (25) ein Werkzeugradius-Datum eingespeist werden kann.

6. Fotoelektrische Einrichtung nach einem der Ansprüche 3 - 5,
   **dadurch gekennzeichnet,**
   daß die als Abtastmustererzeuger ausgebildete Adressiereinrichtung (25) durch einen Betriebsartenumschalter (26) auf verschiedene Abtastmuster umschaltbar ist.

7. Fotoelektrische Einrichtung nach Anspruch 6,
   **dadurch gekennzeichnet,**
   daß die als Abtastmustererzeuger ausgebildete Adressiereinrichtung (25) zur Generierung eines Vollkreises, dessen Mittelpunkt um wenigstens dem Werkzeugradius in Fahrtrichtung des Abtastkopfes (8) vorverlegt ist, während einer Betriebsart einstellbar ist, bei der der Abtastkopf die Vorlagenbahn erfaßt, und danach auf eine Betriebsart umschaltbar ist, bei der der Abtastkopf der Vorlagenbahn folgt, indem die Adressiereinrichtung (25) einen die Vorlagenbahn abtastenden Teilkreis erzeugt, der auf beiden Seiten über die Vorlagenbahn (13) annähernd quer hinausragt.

8. Fotoelektrische Einrichtung nach einem der vorangehenden Ansprüche,
   **dadurch gekennzeichnet,**
   daß die als Abtastmustererzeuger ausgebildete Adressiereinrichtung dergestalt erweitert ist, daß sie außer einem ersten Abtastmuster, welches in Nachführrichtung vorverlagert ist, zeitversetzt ein zweites Abtastmuster erzeugt, welches die Vorlagenbahn im aktuellen Arbeitspunkt (19) kreuzt.

## Claims

1. Photoelectric arrangement for conducting a feeder (8) along a predetermined path (13), which is provided with a uniform arrangement (17) of closely adjacent light-sensitive elements (16) which can be interrogated, and which form a scanning pattern (14) which can be interrogated with an addressing unit, the shape and/or position of which can be varied by selectable interrogation of the data of certain light-sensitive elements (16) from a large number of light-sensitive elements (16) provided in the uniform surface arrangement (17), whereby a section of a pattern plane is copied onto the arrangement for scanning with an essential transverse component of the scanning pattern as well as with an evaluation system, with which control signals are generated from exposure condition signals of the interrogated light-sensitive elements, these control signals controlling the conducting movement of the feeder in two directions of movement (20,21) which are orientated at right angles to each other, characterized in that a reading logic system is connected between the light-sensitive elements (16) of the arrangement (17) and a memory (grid memory 24) of such a type that the conformal image of the geometrical arrangement (17) of the light-sensitive elements (16) is generated in the memory (grid memory 24) and in that an addressing unit (25) constructed as a scanning pattern generator is provided, which produces a series of addresses corresponding to the scanning pattern (14) with which exposure condition data of the light-sensitive elements determined according to the scanning pattern can be interrogated from memory cells of the memory (grid memory 24) with random access.

2. Photoelectric arrangement according to claim 1, characterized in that the light-sensitive elements (16) are disposed in a plane in the form of a grid in gaps and rows (arrangement 17).

3. Photoelectric arrangement with means of shifting the scanning pattern in the direction of the conducting movement and/or at right angles to the conducting movement for a prior adjustment of the speed and/or transverse shifting of the tool for controlling a metal-cutting machine according to claim 1 or 2, characterized in that the shifting operation is effected by selecting the interrogation of the memory cells, which are associated with the light-sensitive elements (16) from the large number in the uniform surface arrangement (17), which are located at a distance to the light-sensitive elements corresponding to the shifting movement, which form a normal scanning pattern.

4. Photoelectric arrangement with an evaluation system according to claims 1 and 3, characterized in that an outlet of the evaluation system (28, 31, 32) which forms signals of a path vector from the exposure condition signals of the interrogated memory cells so that the conducting movement of the feeder occurs on this path vector and so that the amount of the path vector corresponds to the conducting speed, is connected via a scanning pattern displacement logic system (27), to the addressing unit (25) constructed as a scanning pattern generator and in that the scanning pattern displacement logic system is constructed in such a way that the scanning pattern intersects the predetermined path (13) at least approximately at right angles.

5. Photoelectric arrangement according to claim 4, characterized in that a tool radius datum can be fed into the scanning pattern displacement logic system (25) for the transverse shifting of the tool of a metal-cutting machine controlled with the photoelectric arrangement.

6. Photoelectric arrangement according to one of claims 3 to 5, characterized in that the addressing unit (25) constructed as a scanning pattern generator can be switched over to different scanning patterns by means of a function change-over switch (26).

7. Photoelectric arrangement according to claim 6, characterized in that the addressing unit (25) constructed as a scanning pattern generator for generating a full circle, the centre point of which is advanced by at least the tool radius in the direction of travel of the feeder (8), can be set during an operating function, during which the feeder picks up the predetermined path and after that can be switched over to a function, during which the feeder follows the predetermined path, whilst the addressing unit (25) generates a divided circle which scans the predetermined path and which protrudes over the predetermined path (13) approximately at right angles on both sides.

8. Photoelectric arrangement according to one of the preceding claims, characterized in that the addressing unit constructed as a scanning pattern generator is extended in such a way that in addition to a first scanning pattern, which is moved forward in the conducting direction, it generates a second scanning pattern with a time shift, which crosses the predetermined path in the actual operating point (19).

**Revendications**

1. Dispositif photo-électrique pour faire suivre un tracé-modèle prédéterminé (13) à un palpeur (8) qui comporte une disposition (17) invariable d'éléments photosensibles (16) susceptibles d'être interrogés, qui sont disposés selon un agencement côte à côte très dense, et qui élaborent un modèle de balayage (14) susceptible d'être interrogé à l'aide d'un dispositif d'adressage et dont la forme et/ou la position peuvent être modifiées par une interrogation sélective des données d'éléments photosensibles (16) déterminés, d'un plus grand nombre d'éléments photosensibles (16) prévus dans la disposition plane invariable (17), une image d'un extrait d'un plan du tracé modèle prédéterminé étant formée pour un balayage à l'aide d'une composante sensiblement transversale du modèle de balayage, l'installation comportant également un dispositif d'exploitation des données à l'aide duquel sont élaborés, à partir de signaux d'état d'éclairement des éléments photosensibles interrogés des signaux de commande qui commandent le mouvement de poursuite du palpeur dans deux directions de mouvement (20, 21) orientées perpendiculairement entreelles,
caractérisée
en ce qu'entre les éléments photosensibles (16) de la disposition (17) et une mémoire (mémoire à réseau 24) est insérée une logique de lecture (23) de configuration telle que dans la mémoire (mémoire à réseau 24) est élaborée l'image conforme de la disposition géométrique (17) des éléments photosensibles (16), et en ce qu'est prévu un dispositif d'adressage (25) qui se présente sous la forme d'un générateur de modèles de balayage, et qui génère une suite d'adresses correspondant au modèle de balayage (14), à l'aide desquelles il est possible de relever des données d'état d'éclairement des éléments photosensibles déterminés en fonction du modèle de balayage, par interrogation de cellules de mémoire de la mémoire (mémoire à réseau 24) et selon un accès aléatoire.

2. Dispositif photo-électrique selon la revendication 1, caractérisé en ce que les éléments photosensibles (16) sont disposés dans un plan selon un quadrillage en colonnes et en lignes (disposition 17).

3. Dispositif photo-électrique comportant des moyens pour effectuer une translation du modèle de balayage dans la direction du mouvement de poursuite et/ou transversalement au mouvement de poursuite pour un décalage d'avance de vitesse et/ou un décalage transversal d'outil en vue de commander une machine d'usinage, selon la revendication 1 ou 2, caractérisé en ce que la translation s'effectue par la sélection de l'interrogation des cellules de mémoire affectées aux éléments photosensibles (16) du plus grand nombre de ces éléments de la disposition plane invariable (17), qui sont situés à une distance correspondant à la translation, des éléments photosensibles qui constituent un modèle normal de balayage.

4. Dispositif photo-électrique comportant un dispositif d'exploitation de données, selon les revendications 1 à 3, caractérisé en ce qu'une sortie du dispositif d'exploitation des données (28, 31, 32) qui élabore, à partir des signaux d'état d'éclairement des cellules de mémoire interrogées, des signaux d'un vecteur de trajectoire sur lequel s'effectue le mouvement de poursuite du palpeur, l'amplitude du vecteur de trajectoire correspondant à la vitesse de poursuite, est reliée par l'intermédiaire d'une logique de translation de modèle de balayage (27), au dispositif d'adressage (25) se présentant sous la forme d'un générateur de modèles de balayage, et en ce que la logique de translation de modèle de balayage est conçue de telle sorte que le modèle de balayage coupe au moins sensiblement de manière transversale le tracé-modèle prédéterminé (13).

5. Dispositif photo-électrique selon la revendication 4, caractérisé en ce que pour le décalage transversal d'outil d'une machine d'usinage commandée par le dispositif photo-électrique, il est possible de fournir à la logique de translation de modèle de balayage (27), une donnée de rayon d'outil.

6. Dispositif photo-électrique selon l'une des revendications 3 à 5, caractérisé en ce que le dispositif d'adressage (25) se présentant sous la forme d'un générateur de modèles de balayage, peut être commuté sur différents modèles de balayage au moyen d'un commutateur de sélection de modes de fonctionnement (26).

7. Dispositif photo-électrique selon la revendication 6, caractérisé en ce que le dispositif d'adressage (25) se présentant sous la forme d'un générateur de modèles de balayage, peut être réglé sur un mode de fonctionnement pour générer un cercle complet dont le centre est en avance d'au moins la valeur du rayon d'outil dans la direction de déplacement du palpeur (8), et au cours duquel le palpeur détecte le tracé modèle prédéterminé, puis peut être commuté sur un mode de fonctionnement au cours duquel le palpeur suit le tracé , par le fait que le dispositif d'adressage (25) élabore un cercle partiel qui balaye le tracé modèle prédéterminé, et qui dépasse de façon approximativement transversale des deux côtés du tracé modèle prédéterminé (13).

8. Dispositif photo-électrique selon l'une des revendications précédentes, caractérisé en ce que le dispositif d'adressage se présentant sous la forme d'un générateur de modèles de balayage, est étendu de façon à élaborer de manière décalée dans le temps, en-dehors d'un premier modèle de balayage qui est décalé en avant dans la direction de la poursuite, un second modèle de balayage qui croise le tracé modèle prédéterminé au niveau du point de travail actuel (19).

FIG. 1

14 ABTASTMUSTER
(GENERIERTE KURVE)

20 VERFAHRRICHTUNG
VORVERLAGERUNG

22 VERLAGERUNGSVEKTOR

19 ARBEITSPUNKT

21 QUERVERLAGERUNG
(WERKZEUGVERSATZ)

13 VORLAGEBAHN

18 EINZELNES
LICHTEMPFINDLICHES
ELEMENT
(PROJEKTION)

Fig.2

Fig.3